# FASCICULE DE BREVET EUROPEEN

(11) **EP 1 565 366 B1**
(45) Date de publication et mention de la délivrance du brevet: **24.01.2007**
(21) Numéro de dépôt: 03795819.6
(22) Date de dépôt: 14.11.2003
(51) Int. Cl.: B60T 11/20, B60T 11/236

(54) **MAITRE-CYLINDRE A COURSE D APPLICATION REDUITE**
HAUPTBREMSZYLINDER MIT KURZEM BETÄTIGUNSWEG
MASTER CYLINDER WITH REDUCED APPLICATION STROKE

(30) Priorité: 22.11.2002 FR 0214779
(43) Date de publication de la demande: 24.08.2005
(73) Titulaire: ROBERT BOSCH GMBH, 70442 Stuttgart (DE)
(72) Inventeur: LEBRET, Pierre, F-78000 VERSAILLES (FR)
(86) Numéro de dépôt international: PCT/EP2003/012748
(87) Numéro de publication internationale: WO 2004/048175

(56) Documents cités:
- DE-A- 19 537 038
- US-A- 4 989 498
- US-A- 5 187 934
- US-A1- 2002 129 602

## Description

L'invention concerne un maître-cylindre hydraulique de freinage de type "tandem" pour un véhicule automobile.

L'invention concerne plus particulièrement un maître-cylindre hydraulique de freinage de type "tandem" pour un véhicule automobile, du type qui comporte un corps sensiblement axial à l'intérieur d'un alésage duquel sont montés coulissants, d'arrière en avant, deux pistons axiaux primaire et secondaire qui sont susceptibles d'être actionnés par un conducteur du véhicule entre une position arrière de repos et une position avant d'application d'un effort de freinage, du type dans lequel chaque piston est rappelé élastiquement vers sa position arrière de repos à l'encontre d'une première butée arrière, du type dans lequel au moins un moyen d'étanchéité est interposé entre chaque piston et l'alésage pour délimiter dans l'alésage une chambre d'alimentation arrière en fluide hydraulique et une chambre de pression avant, du type dans lequel chaque piston comporte un alésage qui est ouvert vers l'avant et communique avec la chambre de pression avant, du type dans lequel le piston comporte au moins un clapet sensiblement radial qui débouche dans sa périphérie et dans son alésage et qui est mobile entre une position de passage, correspondant à la position arrière de repos du piston, selon laquelle le clapet est agencé en arrière du moyen d'étanchéité et met en communication la chambre arrière d'alimentation et la chambre de pression avant, et une position d'isolation, correspondant à la position avant d'application du piston, selon laquelle le clapet est agencé en avant du moyen d'étanchéité et interrompt la communication entre la chambre arrière d'alimentation et la chambre avant de pression pour permettre l'établissement d'une pression hydraulique de freinage dans la chambre de pression avant, et du type dans lequel la chambre avant de pression associée à chaque piston comporte au moins un élément cylindrique tubulaire intérieur au piston qui s'étend axialement en arrière du moyen d'étanchéité et qui est destiné, lors de l'avancée du piston primaire, à obturer le clapet radial pour obtenir une course de fermeture du clapet inférieure à la distance séparant le clapet du moyen d'étanchéité.

On connaît de nombreux exemples de réalisation d'un maître-cylindre de ce type.

Le document US 4989498 décrit un maître-cylindre qui est considéré comme l'état plus proche de la technique.

Dans un tel maître-cylindre, la pression hydraulique de freinage ne s'établit dans la chambre avant de pression associée à chaque piston qu'après que ledit piston ait parcouru une course déterminée, appelée "course morte", qui correspond à la distance séparant la position dé repos du clapet radial du piston du moyen d'étanchéité.

En effet, tant que le clapet radial est agencé en arrière du moyen d'étanchéité, la chambre arrière d'alimentation et la chambre avant de pression associée communiquent et sont soumises à une pression égale.

En revanche, lorsque, suite à l'avancée du piston, le clapet radial est passé en avant du moyen d'étanchéité, c'est à dire lorsque le piston a parcouru toute la "course morte", la chambre avant de pression se retrouve isolée de la chambre arrière d'alimentation, et de ce fait la pression hydraulique de freinage croît dans la chambre avant de pression à mesure que le piston avance, ce qui permet d'appliquer un effort de freinage.

Il importe donc, pour obtenir le plus rapidement possible l'établissement d'un pression hydraulique de freinage dans la chambre de pression, de réduire autant que possible la "course morte" de chaque piston.

Or il n'est pas possible de réduire la distance séparant le clapet radial du piston au repos du moyen d'étanchéité en modifiant les cotes de construction du maître-cylindre.

En effet, d'une part, le clapet radial doit nécessairement, au repos, être agencé en regard d'un orifice d'alimentation communiquant avec un réservoir hydraulique du maître-cylindre.

D'autre part, le moyen d'étanchéité, qui est généralement conçu sous la forme d'un joint à lèvre reçu dans une gorge du maître-cylindre, est distant de l'orifice d'alimentation d'au moins une distance correspondant à l'épaisseur d'une paroi arrière d'une gorge de maintien du joint à lèvre.

Pour remédier à cet inconvénient, on a proposé de réduire la "course morte" en interposant entre le clapet radial et le moyen d'étanchéité un élément cylindrique tubulaire fixe intérieur au piston qui s'étend axialement en arrière du moyen d'étanchéité et qui est destiné, lors de l'avancée du piston, à obturer le clapet radial pour obtenir une course de fermeture du clapet inférieure à la distance séparant le clapet du moyen d'étanchéité, de manière à permettre la fermeture du clapet radial avant que celui-ci n'aie franchi le moyen d'étanchéité.

Selon une première conception connue, le moyen d'étanchéité est monté de manière fixe dans l'alésage de la chambre de piston, et de ce fait il présente un encombrement axial important.

Cette conception ne permet pas de disposer d'un maître cylindre compact qui puisse être monté dans un véhicule dans le compartiment moteur duquel l'espace disponible est réduit.

De plus, cette conception exige le respect strict de cotes de circularité et de cylindricité lors de l'usinage de l'alésage pour permettre un centrage adéquat de l'élément tubulaire dans l'alésage du piston, centrage qui est nécessaire à l'obtention d'une bonne étanchéité.

Pour remédier à cet inconvénient, selon une deuxième conception connue, on a proposé un maître cylindre comportant un élément cylindrique tubulaire mobile qui est rappelé élastiquement en appui contre un épaulement de la chambre de pression de l'alésage du maître-cylindre par l'intermédiaire d'un ressort.

Cette conception impose, dans le cas d'un maître-cylindre de type "tandem" d'utiliser un ressort pour chaque chambre de pression. Cette conception complique donc le montage des éléments du maître cylindre, et elle grève donc les coûts de fabrication d'un tel maître-cylindre.

Pour remédier à cet inconvénient l'invention propose un maître-cylindre du type décrit précédemment, comportant un élément cylindrique tubulaire débrayable intérieur à chaque piston, c'est à dire mobile et dont les mouvements sont commandés directement par ledit piston.

Dans ce but, l'invention propose un maître-cylindre du type décrit précédemment, caractérisé en ce que chaque élément cylindrique tubulaire comporte :
- des premiers moyens amovibles de liaison avec l'alésage et
- des seconds moyens amovibles de liaison avec le piston associé,
qui sont respectivement destinés à permettre à chaque piston d'entraîner lors de son avancée, puis de ramener lors de son recul, l'élément cylindrique tubulaire associé pour que celui présente un encombrement axial minimal dans l'alésage.

Selon d'autres caractéristiques de l'invention:
- l'élément cylindrique tubulaire est agencé radialement au moins en partie à l'intérieur de l'alésage du piston,
- le piston est monobloc, son alésage est fermé à son extrémité arrière par une paroi transversale de fond, et le clapet radial comporte au moins un perçage qui débouche dans la périphérie et dans l'alésage du piston,
- l'élément cylindrique tubulaire comporte:
   - un tronçon avant tubulaire, qui s'étend axialement en avant du moyen d'étanchéité et qui comporte les premiers moyens amovibles de liaison avec l'alésage du corps du maître-cylindre,
   - un tronçon arrière tubulaire, dont le diamètre extérieur est du diamètre de l'alésage du piston, qui s'étend axialement en arrière du tronçon avant de l'élément cylindrique tubulaire et dont l'extrémité arrière est agencée en arrière du moyen d'étanchéité et en avant du perçage du piston lorsqu'il est dans sa position arrière de repos, et qui comporte les seconds moyens amovibles de liaison avec le piston,
- les premiers moyens amovibles de liaison avec l'alésage de l'élément cylindrique tubulaire comportent au moins deux premières pattes radiales élastiques, qui s'étendent radialement à intervalles réguliers à partir du tronçon avant, et qui sont susceptibles de se verrouiller/se déverrouiller dans une gorge de l'alésage qui agencée en avant du moyen d'étanchéité,
- les seconds moyens amovibles de liaison comportent au moins deux secondes pattes radiales élastiques qui s'étendent radialement vers l'extérieur à partir de la périphérie du tronçon arrière de l'élément cylindrique tubulaire et qui sont susceptibles de se verrouiller/se déverrouiller dans une gorge de l'alésage du piston,
- chaque seconde patte radiale élastique est agencée perpendiculairement à l'extrémité d'un bras longitudinal flexible logé dans une lumière longitudinale de la périphérie du tronçon arrière de l'élément cylindrique tubulaire,
- les secondes pattes radiales élastiques sont agencées en avant du perçage formant le clapet du piston,
- les secondes pattes radiales élastiques sont agencées en arrière du perçage formant le clapet du piston,
- la distance séparant les premières pattes élastiques des secondes pattes élastiques est égale à la distance séparant la gorge de l'alésage du piston primaire de son extrémité avant,
- le moyen d'étanchéité est constitué d'un joint à lèvre qui est reçu dans une gorge de l'alésage du maître-cylindre.

D'autres caractéristiques et avantages de l'invention apparaîtront à la lecture de la description détaillée qui suit pour la compréhension de laquelle on se reportera aux dessins annexés dans lesquels :

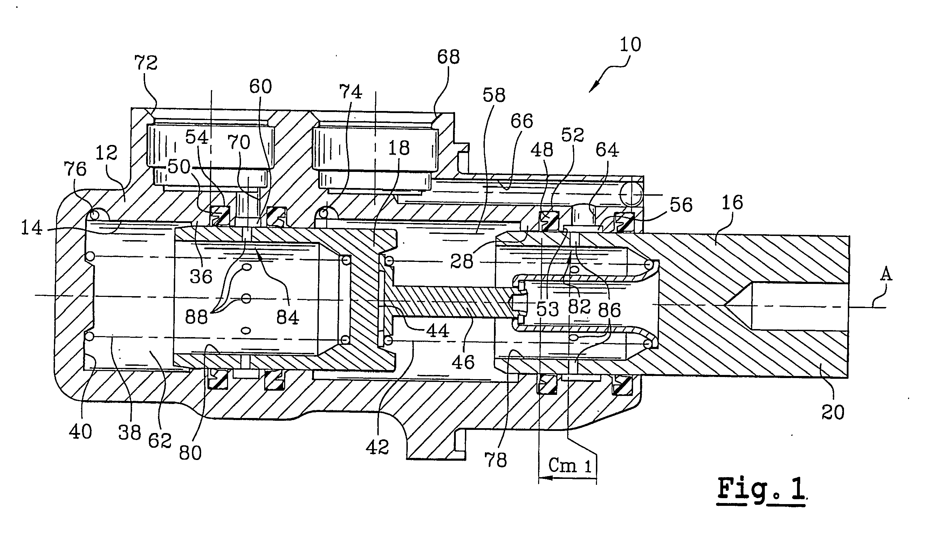

- la figure 1 est une vue en coupe axiale d'un maître-cylindre de type "tandem" selon un état antérieur de la technique représenté en position de repos ;

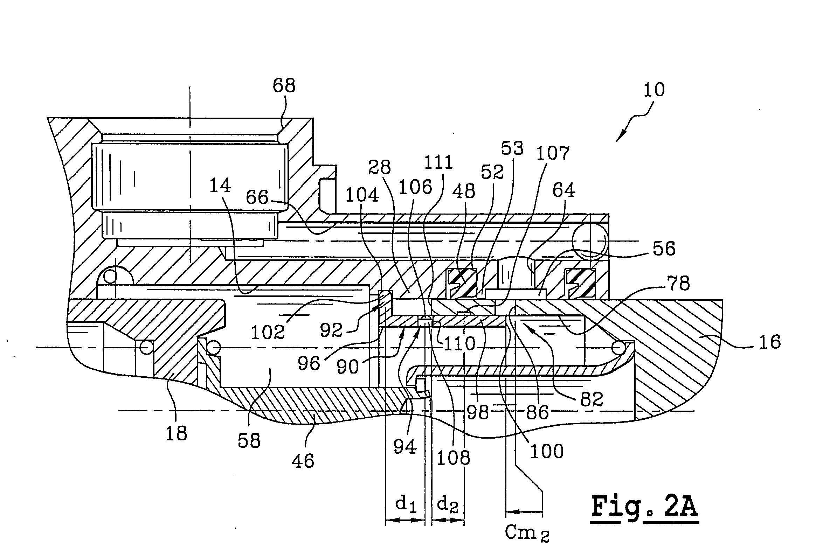

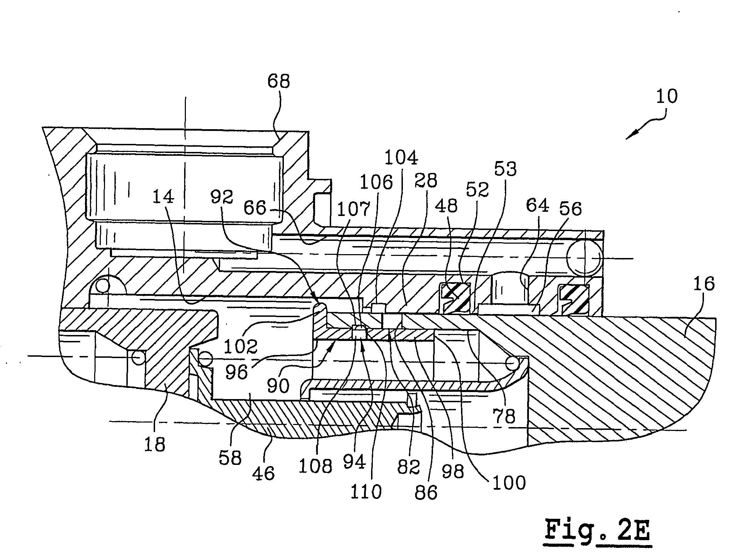

- les figures 2A à 2E sont des vues en coupe de détail d'un maître-cylindre de type "tandem" selon un premier mode de réalisation de l'invention représenté respectivement suivant des positions successives d'avancée du piston primaire, d'une position de repos à une position extrême d'application d'un effort de freinage, en passant par une position d'isolation de la chambre avant primaire de pression et deux positions intermédiaires d'application d'un effort de freinage,

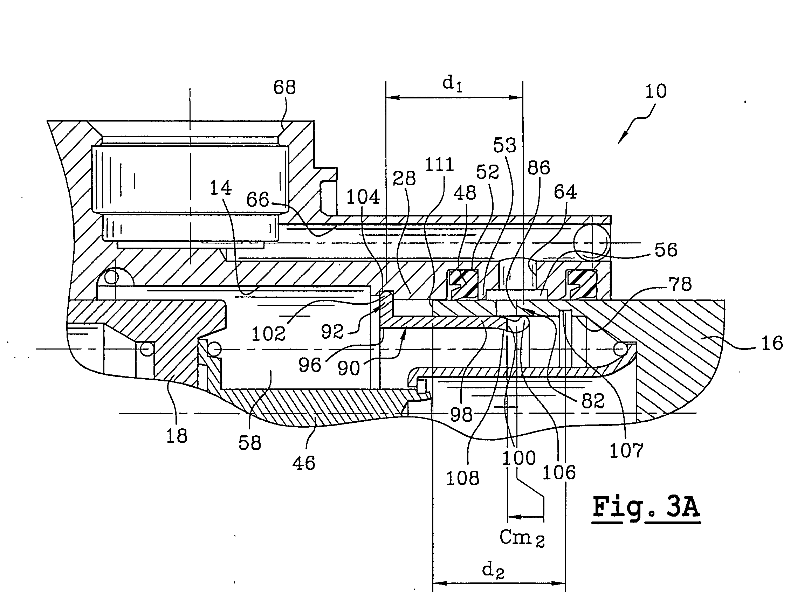

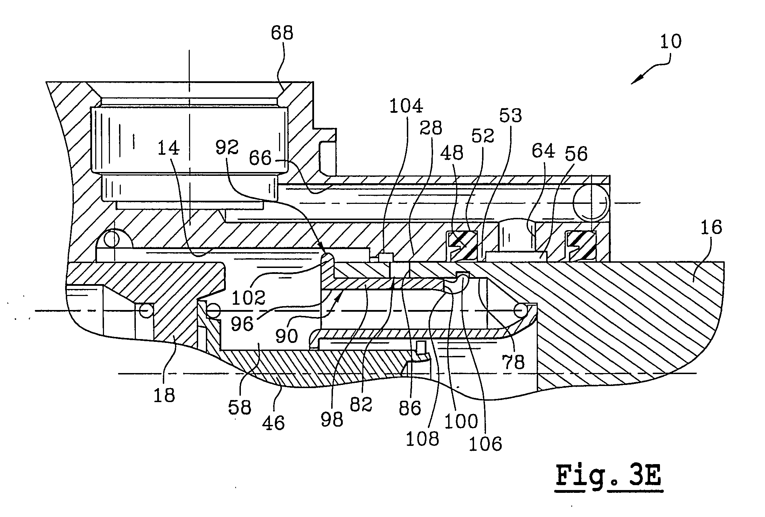

- les figures 3A à 3E sont des vues en coupe de détail d'un maître-cylindre de type "tandem" selon un deuxième mode de réalisation de l'invention représenté respectivement suivant des positions successives d'avancée du piston primaire, d'une position de repos à une position extrême d'application d'un effort de freinage, en passant par une position d'isolation de la chambre avant primaire de pression.

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

On a représenté à la figure 1 l'ensemble d'un maître-cylindre 10 de freinage pour un véhicule automobile.

De manière connue, le maître-cylindre 10 est un maître-cylindre de type "tandem" qui comporte un corps 12 sensiblement axial d'axe A à l'intérieur d'un alésage 14 duquel sont montés coulissants deux pistons axiaux 16 et 18.

Le piston 16, dit piston primaire 16, est destiné à permettre l'établissement d'une pression hydraulique dans un circuit primaire de freinage du véhicule (non représenté), et le piston 18, dit piston secondaire 18, est destiné à permettre l'établissement d'une pression hydraulique dans un circuit secondaire de freinage du véhicule (non représenté) qui est indépendant du circuit primaire de freinage du véhicule.

Le piston primaire 16 est susceptible d'être actionné directement par un conducteur du véhicule. Par exemple, une extrémité arrière 20 du piston primaire 16 est susceptible d'être reliée à un servomoteur (non représenté) qui amplifie les efforts exercés sur une pédale de freinage du véhicule.

Le piston secondaire 18 est susceptible d'être actionné indirectement par le conducteur du véhicule, notamment par le piston primaire 16, comme on le verra ultérieurement.

Chaque piston primaire 16 ou secondaire 18 est ainsi mobile entre une position arrière de repos, qui est représentée à la figure 1, et une position avant d'application d'un effort de freinage.

De manière connue, chaque piston primaire 16 ou secondaire 18 est rappelé élastiquement vers sa position arrière de repos. Il peut éventuellement être rappelé élastiquement vers sa position arrière de repos à l'encontre d'une butée (non représentée).

Le piston secondaire 18 est rappelé vers l'arrière par un ressort 38 qui prend appui sur une face 40 transversale d'extrémité avant de l'alésage 14 et sur le piston secondaire 18, et le piston primaire 16 est rappelé élastiquement vers l'arrière par un ressort 42 qui prend appui sur une face 44 transversale arrière du piston secondaire 18 et sur le piston primaire 16. Plus particulièrement, le ressort 42 est monté autour d'un vérin coulissant 46 qui est interposé entre la face 44 transversale arrière du piston secondaire 18 et le piston primaire 16. Le ressort 42 est préchargé, pour permettre au piston primaire 16 de repousser le piston secondaire 18 lors de l'application d'un effort de freinage.

Le maître-cylindre comporte au moins deux moyens avant d'étanchéité primaire 48 et secondaire 50 qui sont interposés respectivement entre le piston primaire 16 et l'alésage 14, et entre le piston secondaire 18 et l'alésage 14.

Dans le mode de réalisation préféré de l'invention, mais de façon non limitative de celle-ci, les moyens d'étanchéité primaire et secondaire sont réalisés par des joints à lèvre 48 et 50 qui sont reçus dans des gorges 52 et 54 du corps 12 agencées respectivement en arrière d'épaulements 28 et 36 de l'alésage 14. Chaque joint 48, 50 comporte au moins une lèvre qui est au contact de la périphérie du piston 16,18 associé.

Cette configuration n'est évidemment pas limitative de l'invention, et les joints 48, 50 pourraient être reçus dans des boîtiers cylindriques rapporté dans le corps du maître cylindre, lesdits boîtiers comportant tout ou partie des gorges 52, 54 dans lesquelles sont reçus les joints 48, 50.

Le moyen primaire d'étanchéité 48 délimite dans l'alésage 14 une chambre 56 primaire d'alimentation arrière et une chambre 58 primaire de pression avant. De même, le moyen secondaire d'étanchéité 50 délimite dans l'alésage 14 une chambre 60 secondaire d'alimentation arrière et une chambre 62 secondaire de pression avant.

Le corps 12 comporte un conduit 64 primaire radial d'alimentation qui relie un réservoir extérieur primaire (non représenté) de fluide hydraulique à la chambre d'alimentation primaire arrière 56.

En particulier, le conduit 64 primaire radial est par exemple relié par l'intermédiaire d'un conduit longitudinal intermédiaire 66 à un orifice 68 qui débouche à l'extérieur du corps 12 et qui est destiné à recevoir une bouche de sortie (non représentée) du réservoir primaire associé.

De même, le corps 12 comporte un conduit 70 secondaire radial d'alimentation qui relie un réservoir extérieur secondaire (non représenté) de fluide hydraulique à la chambre d'alimentation secondaire arrière 60. Le conduit 70 débouche à l'extérieur du corps 12 par l'intermédiaire d'un orifice 72 qui est destiné à recevoir une bouche de sortie (non représentée) du réservoir secondaire associé.

Le corps 12 comporte deux perçages primaire 74 et secondaire 76 qui débouchent respectivement d'une part dans les chambres de pression primaire 58 et secondaire 62 et d'autre part à l'extérieur du corps 12 pour alimenter des circuits de freinage associés (non représentés) primaire et secondaire.

De manière connue, chaque piston 16, 18 comporte un alésage. 78, 80 qui est ouvert vers l'avant, dont l'extrémité arrière est fermée par une paroi transversale de fond, et qui communique avec la chambre de pression avant 58, 62. Chaque piston 16, 18 comporte au moins un clapet 82, 84 qui est agencé entre la chambre d'alimentation arrière 56, 60 et l'alésage 78, 80 du piston 16, 18.

Chaque clapet 82, 84 comporte, à titre d'exemple et de manière non limitative de l'invention, au moins un perçage radial 86, 88, agencé entre l'alésage 78, 80 de chaque piston 16, 18 et sa périphérie, dont la position par rapport au joint à lèvre 48, 50 permet ou non le passage du fluide hydraulique de la chambre d'alimentation arrière 56, 60 vers la chambre de pression avant 58, 62.

De préférence, chaque clapet 82, 84 comporte une pluralité de perçages 86, 88 qui sont agencés angulairement de manière régulière autour de la périphérie du piston 16, 18.

Ainsi, chaque clapet 82, 84 est mobile entre une position ouverte, représentée à la figure 1, dans laquelle, lorsqu'un des pistons 16, 18 est dans sa position arrière de repos, il met en communication la chambre d'alimentation arrière 56 ou 60 dudit piston 16, 18 avec la chambre de pression avant 58 ou 62 dudit piston 16, 18, et une position fermée (non représentée) dans laquelle, lorsque le piston 16, 18 est mû axialement vers l'avant vers sa position d'application, il isole la chambre de pression avant 58, 62 associée de la chambre d'alimentation arrière 56, 60 associée et permet ainsi l'établissement d'une pression de freinage dans la chambre de pression avant 58, 62.

Dans la suite de la présente description, on s'attachera plus particulièrement au fonctionnement du piston primaire 16 mobile dans la chambre 58 de pression avant primaire, attendu que le fonctionnement des pistons primaire 16 et secondaire 18 est sensiblement analogue.

Plus particulièrement, dans la configuration précédemment évoquée, la fermeture du clapet primaire 82 est assujettie au parcours, par le piston primaire 16, d'une course "Cm₁" dite "course morte", qui correspond à la distance séparant le perçage 86 du joint 48.

Ainsi, tant que le piston 16 n'a pas parcouru la course morte "Cm₁", le perçage 86 demeure en arrière du joint à lèvre 48 et permet le passage du fluide hydraulique entre la chambre primaire d'alimentation arrière 56 et la chambre primaire de pression avant 58. Dans ce cas, le clapet 82 est ouvert.

En revanche, une fois que le piston 16 a parcouru la course morte "Cm₁", le perçage 86 a franchi le joint à lèvre 48 et le passage du fluide hydraulique entre la chambre 56 primaire d'alimentation arrière et la chambre 58 primaire de pression avant est interrompu. Dans ce cas, le clapet 82 est fermé.

Or il importe, pour bénéficier d'un freinage d'une efficacité maximum, de réduire au maximum la valeur de la course morte pour chacun des deux pistons 16, 18.

Selon la configuration qui a été précédemment décrite en référence au piston primaire 16 et qui s'applique aussi au piston secondaire 18, il n'est pas possible de réduire la distance séparant le perçage 86 du joint 48.

En effet, d'une part, il est nécessaire qu'une paroi arrière 53 de la gorge 52 soit d'une épaisseur minimale pour assurer un maintien correct du joint 48 dans sa gorge 52. D'autre part, le perçage 86 doit, en position de repos du piston 16, être agencé sensiblement en regard du conduit d'alimentation 64 de manière à permettre une alimentation optimale du clapet 82 en fluide hydraulique.

Pour remédier à cet inconvénient, comme l'illustrent d'une manière générale les figures 2A à 2E et 3A à 3E, il est connu de proposer un maître cylindre 10 du type décrit précédemment comportant au moins un élément cylindrique tubulaire 90 intérieur au piston 16 qui est agencé dans la chambre 58 primaire de pression avant, qui s'étend axialement en arrière du moyen d'étanchéité 48 et qui est destiné, lors de l'avancée du piston primaire 16, à obturer le clapet radial 82 pour obtenir une course morte "Cm₂" de fermeture du clapet 82 qui est inférieure à la distance séparant le clapet 82 du moyen d'étanchéité 48. Il est par ailleurs connu de proposer une configuration analogue pour le piston secondaire 18.

Un tel élément 90 est généralement monté libre de coulisser dans l'alésage 14 et est rappelé élastiquement contre une face d'épaulement de l'alésage. Il est donc particulièrement encombrant et la construction d'un maître-cylindre 10 comportant un tel élément 90 est donc particulièrement onéreuse.

Pour remédier à cet inconvénient, conformément à l'invention, l'élément 90 cylindrique tubulaire comporte :
- des premiers moyens 92 amovibles de liaison avec l'alésage 14 et
- des seconds moyens 94 amovibles de liaison avec le piston 16,
qui sont respectivement destinés à permettre au piston 16 d'entraîner lors de son avancée, puis de ramener lors de son recul, l'élément 90 cylindrique tubulaire pour que celui présente un encombrement axial minimal dans l'alésage 14.

Il sera compris que l'invention propose une configuration analogue pour un élément cylindrique tubulaire associé au piston 18. Toutefois, dans la suite de la présente description, il ne sera fait référence qu'au piston primaire 16.

Deux modes de réalisation d'un maître-cylindre 10 comportant un tel élément cylindrique tubulaire 90 ont été représentés en particulier d'une part en référence aux figures 2A à 2E et d'autre part en référence aux figures 3A à 3E.

De manière connue, dans ces deux modes de réalisation, l'élément cylindrique tubulaire 90 est agencé radialement au moins en partie à l'intérieur de l'alésage 78 du piston.

Ainsi, l'élément cylindrique tubulaire 90 comporte un tronçon avant 96 tubulaire, qui s'étend axialement en avant du moyen d'étanchéité 48 et qui comporte les premiers moyens 92 amovibles de liaison avec l'alésage 14 du corps 12 du maître-cylindre 10.

L'élément cylindrique tubulaire 90 comporte aussi un tronçon arrière 98 tubulaire, dont le diamètre extérieur est du diamètre de l'alésage 78 du piston 16, et qui s'étend axialement en arrière du tronçon avant 96 de l'élément cylindrique tubulaire 90. L'extrémité arrière 100 du tronçon arrière 98 tubulaire est agencée en arrière du moyen d'étanchéité 48 et en avant du perçage 86 du piston 16 lorsqu'il est dans sa position arrière de repos, comme représenté aux figures 2A et 3A. Le tronçon arrière 98 tubulaire comporte les seconds moyens 94 amovibles de liaison avec le piston 16.

Plus particulièrement, les premier moyens 92 amovibles de liaison avec l'alésage 14 de l'élément cylindrique tubulaire 90 comportent au moins deux premières pattes 102 radiales élastiques, qui s'étendent radialement à intervalles réguliers à partir du tronçon avant 96, et qui sont susceptibles de se verrouiller/se déverrouiller dans une gorge 104 de l'alésage 14 qui agencée en avant du moyen d'étanchéité 48.

Les seconds moyens 94 amovibles de liaison comportent au moins deux secondes pattes 106 radiales élastiques qui s'étendent radialement vers l'extérieur à partir de la périphérie du tronçon arrière 98 de l'élément 90 cylindrique tubulaire et qui sont susceptibles de se verrouiller/se déverrouiller dans une gorge 107 de l'alésage 78 du piston 16.

Selon le premier mode de réalisation qui est représenté aux figures 2A à 2E, les secondes pattes 106 radiales élastiques sont agencées en avant du perçage 86 formant le clapet du piston.

Dans ce mode de réalisation, chaque seconde patte 106 radiale élastique est agencée perpendiculairement à l'extrémité d'un bras 108 longitudinal flexible logé dans une lumière 110 longitudinale de la périphérie du tronçon arrière 98 de l'élément 90 cylindrique tubulaire.

Par ailleurs, la distance "d₁" séparant les premières pattes 102 élastiques des secondes pattes 106 élastiques est égale à la distance "d₂" séparant la gorge 107 de l'alésage 78 du piston 16 primaire de son extrémité avant 111.

Dans cette configuration, le piston primaire 16 est mobile entre cinq positions remarquables.

La course morte "Cm₂" est réduite à la distance séparant le perçage 86 du piston 16 du tronçon arrière 98 de l'élément 90 tubulaire, comme représenté à la figure 2A.

Initialement, le piston primaire 16 occupe sa position de repos, comme représenté à la figure 2A. Dans cette configuration le clapet 82 est ouvert car les perçages 86 sont agencés en arrière du tronçon arrière 98 de l'élément 90 tubulaire.

Dans cette position, les premières pattes radiales élastiques 102 sont reçues dans la gorge 104 et le piston 16 est en retrait du tronçon avant 92 de l'élément tubulaire 90.

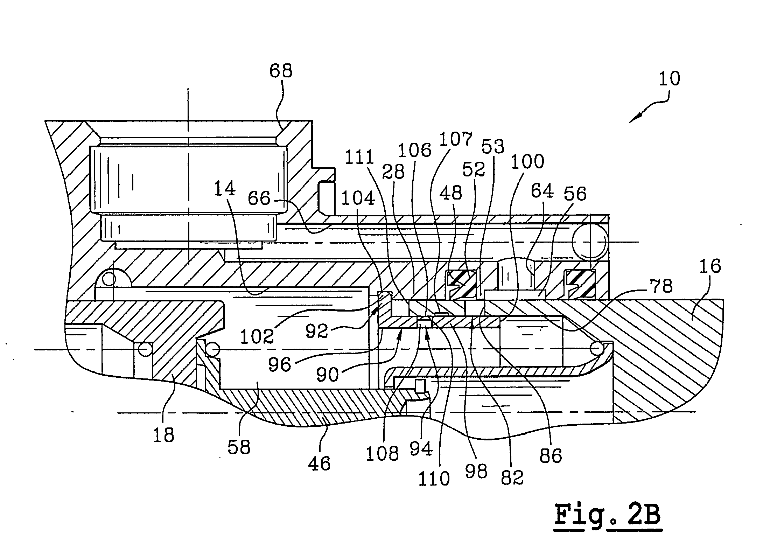

Puis, le piston primaire 16 avançant en parcourant la course morte "Cm₂" comme représenté à la figure 2B, le clapet 82 se ferme car le perçage 86 vient recouvrir le tronçon arrière 98 de l'élément 90 tubulaire, interrompant ainsi la circulation de fluide hydraulique entre la chambre arrière 56 primaire d'alimentation et la chambre avant 58 primaire de pression. Une pression hydraulique de freinage peut alors s'établir dans la chambre avant 58 primaire de pression pour permettre l'application d'un effort de freinage.

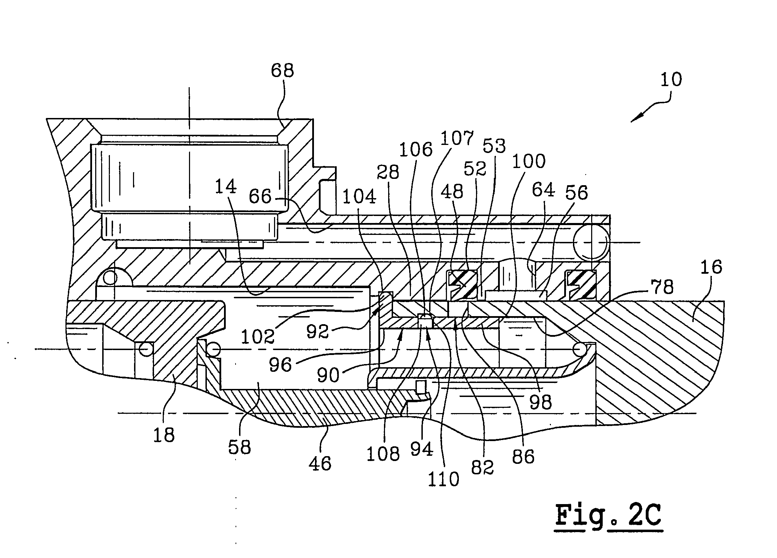

Puis, comme l'illustre la figure 2C, le piston primaire 16 vient au contact du tronçon avant 92 de l'élément tubulaire 90. Les secondes pattes radiales élastiques 106 sont alors reçues dans la gorge 107 de l'alésage 78 du piston 16.

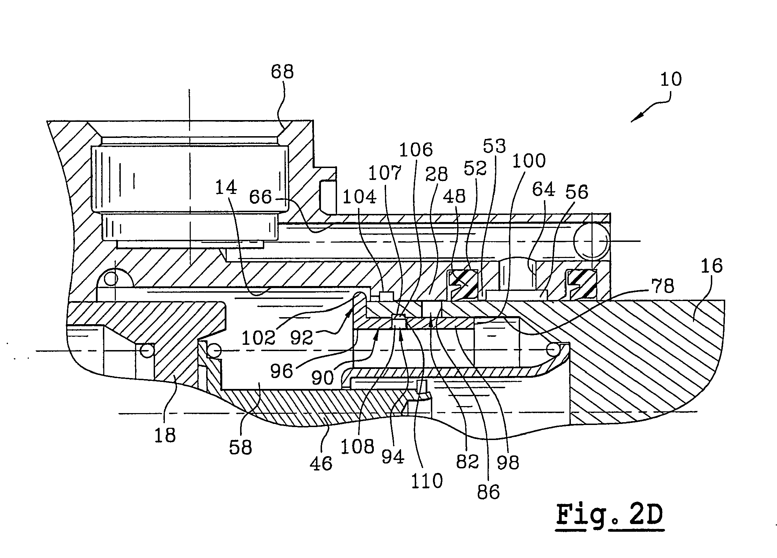

En poursuivant son avancée comme représenté à la figure 2D, le piston primaire 16 repousse le tronçon avant 92 de l'élément tubulaire 90, ce qui a pour effet de conduire les premières pattes radiales élastiques 102 à sortir de la gorge 104 de l'alésage 14.

L'élément 90 tubulaire accompagne donc le piston primaire 16 sur toute la fin de sa course, puisqu'il est verrouillé à celui-ci par l'intermédiaire des secondes pattes élastiques 106 qui sont reçues dans la gorge 107.

Lors du retour du piston, les premières pattes 102 radiales élastiques sont d'abord à nouveau reçues dans la gorge 104, ce qui a pour effet de verrouiller l'élément tubulaire 90 dans l'alésage 14 comme représenté à la figure 2C.

Puis le piston primaire 16 poursuivant son mouvement de recul, les secondes pattes radiales élastiques 106 se déverrouillent en sortant de la gorge 107 de l'alésage 78 du piston 16 comme représenté à la figure 2B.

Le piston primaire 16 peut alors retourner à sa position de repos représentée à la figure 2A. Le clapet 82 est alors à nouveau ouvert.

Selon le deuxième mode de réalisation de l'invention qui est représenté respectivement aux figures 3A à 3D, les secondes pattes radiales élastiques 106 s'étendent à partir de l'extrémité 100 du tronçon arrière 98 de l'élément tubulaire 90 et elles sont agencées en arrière du perçage 86, quelle que soit la position du piston 16 et du tronçon arrière 98 de l'élément tubulaire 90. Cette configuration permet d'améliorer l'étanchéité entre l'élément tubulaire 90 et le piston 16, et elle permet de simplifier la réalisation par moulage de l'élément tubulaire 90.

D'une façon analogue au mode de réalisation précédent, la distance "d₁" séparant les premières pattes 102 élastiques des secondes pattes 106 élastiques est égale à la distance "d₂" séparant la gorge 107 de l'alésage 78 du piston 16 primaire de son extrémité avant 111.

Initialement, le piston primaire 16 occupe sa position de repos, comme représenté à la figure 3A. Dans cette configuration le clapet 82 est ouvert car les perçages 86 sont agencés en arrière de l'extrémité 100 du tronçon arrière 96 de l'élément 90 tubulaire.

Dans cette position, les premières pattes radiales élastiques 102 sont reçues dans la gorge 104 et le piston 16 est en retrait du tronçon avant 92 de l'élément tubulaire 90.

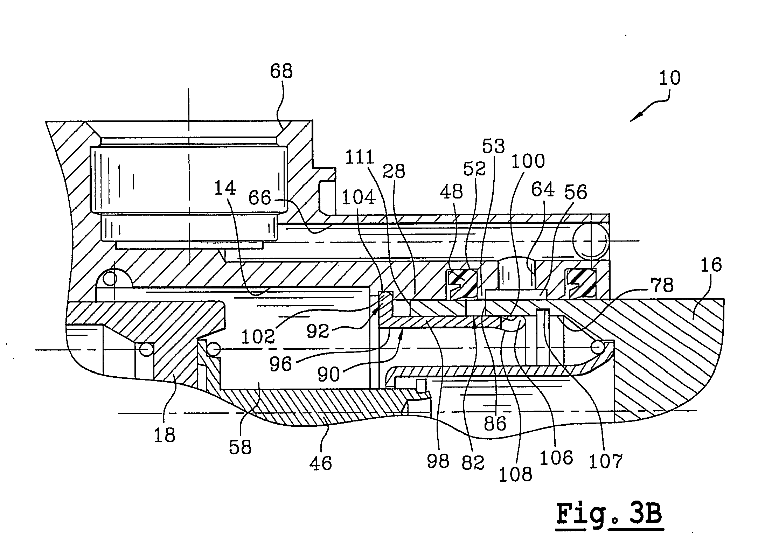

Puis, le piston primaire 16 avançant en parcourant la course morte "Cm₂" comme représenté à la figure 3B, le clapet 82 se ferme car le perçage 86, en franchissant l'extrémité 100 du tronçon arrière 98 de l'élément 90 tubulaire, recouvre l'élément 90 tubulaire et interrompt ainsi la circulation de fluide hydraulique entre la chambre arrière 56 primaire d'alimentation et la chambre avant 58 primaire de pression. Une pression hydraulique de freinage peut alors s'établir dans la chambre avant 58 primaire de pression.

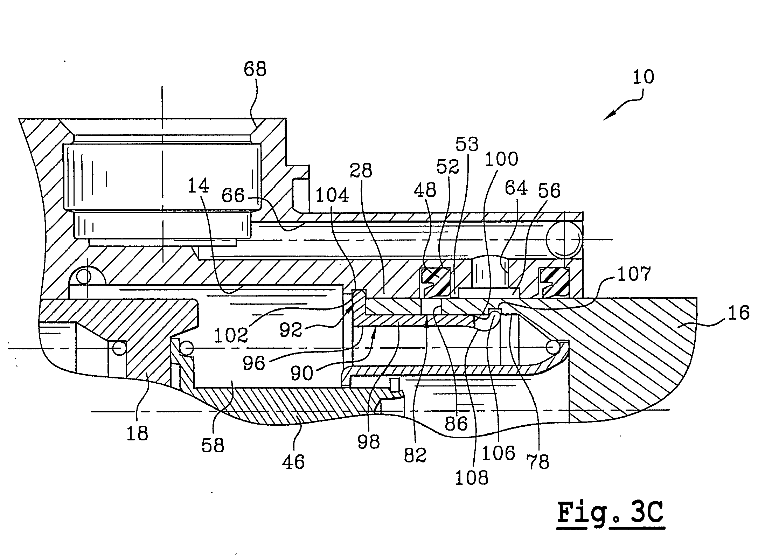

Puis, comme l'illustre la figure 3C, le piston primaire 16 vient au contact du tronçon avant 92 de l'élément tubulaire 90. Les secondes pattes radiales élastiques 106 sont alors reçues dans la gorge 107 de l'alésage 78 du piston 16.

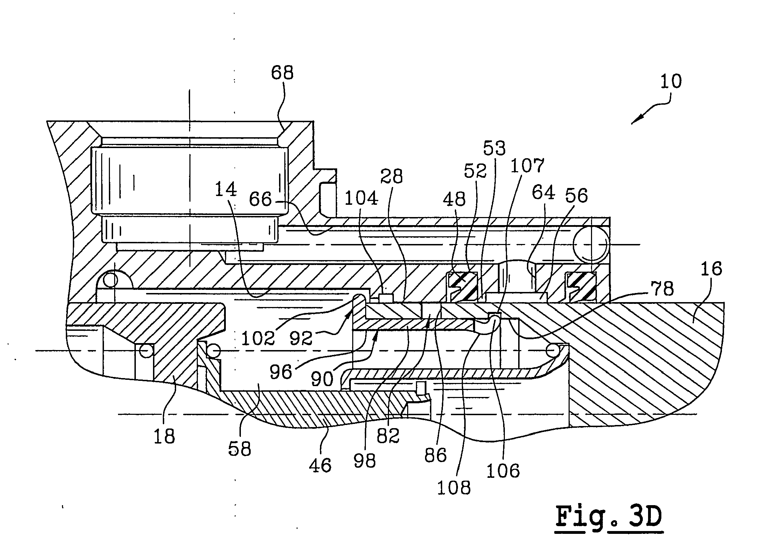

En poursuivant son avancée comme représenté à la figure 3D, le piston primaire 16 repousse le tronçon avant 92 de l'élément tubulaire 90, ce qui a pour effet de conduire les premières pattes radiales élastiques 102 à sortir de la gorge 104 de l'alésage 14.

L'élément 90 tubulaire accompagne donc le piston primaire 16 sur toute la fin de sa course, puisqu'il est verrouillé à celui-ci par l'intermédiaire des secondes pattes élastiques 106 qui sont reçues dans la gorge 107.

Lors du retour du piston, les premières pattes 102 radiales élastiques sont d'abord à nouveau reçues dans la gorge 104, ce qui a pour effet de verrouiller l'élément tubulaire 90 dans l'alésage 14 comme représenté à la figure 3C.

Puis le piston primaire 16 poursuivant son mouvement de recul, les secondes pattes radiales élastiques 106 se déverrouillent en sortant de la gorge 107 de l'alésage 78 du piston 16 comme représenté à la figure 3B.

Le piston primaire 16 peut alors retourner à sa position de repos représentée à la figure 3A. Le clapet 82 est alors à nouveau ouvert.

L'invention permet donc de disposer d'un maître cylindre 10 présentant une course d'application réduite, gage d'un sécurité de freinage accrue.

## Revendications

1. Maître-cylindre (10) hydraulique de freinage de type "tandem" pour un véhicule automobile, du type qui comporte un corps (12) sensiblement axial à l'intérieur d'un alésage (14) duquel sont montés coulissants, d'arrière en avant, deux pistons axiaux primaire (16) et secondaire (18) qui sont susceptibles d'être actionnés par un conducteur du véhicule entre une position arrière de repos et une position avant d'application d'un effort de freinage, du type dans lequel chaque piston (16, 18) est rappelé élastiquement vers sa position arrière de repos à l'encontre d'une première butée arrière, du type dans lequel au moins un moyen d'étanchéité (48, 50) est interposé entre chaque piston (16, 18) et l'alésage (14) pour délimiter dans l'alésage (14) une chambre d'alimentation arrière (56, 60) en fluide hydraulique et une chambre de pression avant (58, 62), du type dans lequel chaque piston (16, 18) comporte un alésage (78, 80) qui est ouvert vers l'avant et communique avec la chambre (58, 62) de pression avant, du type dans lequel le piston (16, 18) comporte au moins un clapet (82, 84) sensiblement radial qui débouche dans sa périphérie et dans son alésage (78, 80) et qui est mobile entre une position de passage, correspondant à la position arrière de repos du piston (16, 18), selon laquelle le clapet (82, 84) est agencé en arrière du moyen d'étanchéité (48, 50) et met en communication la chambre arrière d'alimentation (56, 60) et la chambre de pression avant (58, 62), et une position d'isolation, correspondant à la position avant d'application du piston (16, 18), selon laquelle le clapet (82, 84) est agencé en avant du moyen d'étanchéité (48, 50) et interrompt la communication entre la chambre arrière d'alimentation (56, 60) et la chambre avant de pression (58, 62) pour permettre l'établissement d'une pression hydraulique de freinage dans la chambre de pression avant (58, 62), et du type dans lequel la chambre avant de pression (58) associée à chaque piston (16, 18) comporte au moins un élément (90) cylindrique tubulaire intérieur au piston (16,18) qui s'étend axialement en arrière du moyen d'étanchéité (48,50) et qui est destiné, lors de l'avancée du piston (16,18), à obturer le clapet radial (82,84) pour obtenir une course (Cm₂) de fermeture du clapet inférieure à la distance séparant le clapet (82,84) du moyen d'étanchéité (48,50),
**caractérisé en ce que** chaque élément (90) cylindrique tubulaire comporte :
- des premiers moyens (92) amovibles de liaison avec l'alésage (14) et,
- des seconds moyens (94) amovibles de liaison avec le piston (16) associé,
qui sont respectivement destinés à permettre à chaque piston (16,18) d'entraîner lors de son avancée, puis de ramener lors de son recul, l'élément (90) cylindrique tubulaire associé pour que celui présente un encombrement axial minimal dans l'alésage (14).

2. Maître-cylindre (10) selon la revendication précédente, **caractérisé en ce que** l'élément (90) cylindrique tubulaire est agencé radialement au moins en partie à l'intérieur de l'alésage (78) du piston (16).

3. Maître cylindre (10) selon l'une quelconque des revendications précédentes, **caractérisé en ce que** le piston (16) est monobloc, **en ce que** son alésage (78) est fermé à son extrémité arrière par une paroi transversale de fond, et **en ce que** le clapet radial (82) comporte au moins un perçage (86) qui débouche dans la périphérie et dans l'alésage (78) du piston (16).

4. Maître-cylindre (10) selon les revendications 2 et 3 prises en combinaison, **caractérisé en ce que** l'élément cylindrique tubulaire (90) comporte:
- un tronçon avant (96) tubulaire, qui s'étend axialement en avant du moyen d'étanchéité (48) et qui comporte les premiers moyens (92) amovibles de liaison avec l'alésage (14) du corps (12) du maître-cylindre (10),
- un tronçon arrière (98) tubulaire, dont le diamètre extérieur est du diamètre de l'alésage (78) du piston (16), qui s'étend axialement en arrière du tronçon avant (96) de l'élément cylindrique tubulaire et dont l'extrémité arrière (100) est agencée en arrière du moyen d'étanchéité (48) et en avant du perçage (86) du piston (16) lorsqu'il est dans sa position arrière de repos, et qui comporte les seconds moyens (94) amovibles de liaison avec le piston (16).

5. Maître-cylindre (10) selon la revendication précédente, **caractérisé en ce que** les premiers moyens (92) amovibles de liaison avec l'alésage (14) de l'élément cylindrique tubulaire (90) comportent au moins deux premières pattes (102) radiales élastiques, qui s'étendent radialement à intervalles réguliers à partir du tronçon avant (96), et qui sont susceptibles de se verrouiller/se déverrouiller dans une gorge (104) de l'alésage (14) qui agencée en avant du moyen d'étanchéité (48)

6. Maître cylindre (10) selon l'une des revendications 4 ou 5, **caractérisé en ce que** les seconds moyens (94) amovibles de liaison comportent au moins deux secondes pattes (106) radiales élastiques qui s'étendent radialement vers l'extérieur à partir de la périphérie du tronçon arrière (98) de l'élément (90) cylindrique tubulaire et qui sont susceptibles de se verrouiller/se déverrouiller dans une gorge (107) de l'alésage (78) du piston (16).

7. Maître cylindre (10) selon la revendication précédente, **caractérisé en ce que** chaque seconde patte (106) radiale élastique est agencée perpendiculairement à l'extrémité d'un bras (108) longitudinal flexible logé dans une lumière (110) longitudinale de la périphérie du tronçon arrière (98) de l'élément (90) cylindrique tubulaire.

8. Maître cylindre (10) selon l'une quelconque des revendications 6 ou 7, **caractérisé en ce que** les secondes pattes (106) radiales élastiques sont agencées en avant du perçage (86) formant le clapet (82) du piston (16).

9. Maître cylindre (10) selon la revendication 6, **caractérisé en ce que** les secondes pattes (106) radiales élastiques s'étendent à partir de l'extrémité (100) du tronçon arrière (98) de l'élément (90) tubulaire et sont agencées en arrière du perçage (86) formant le clapet (82) du piston (16).

10. Maître cylindre (10) selon l'une quelconque des revendications 6 à 9, **caractérisé en ce que** la distance (d₁) séparant les premières pattes (102) élastiques des secondes pattes (106) élastiques est égale à la distance (d₂) séparant la gorge (107) de l'alésage (78) du piston (16) primaire de son extrémité avant.

11. Maître-cylindre (10) selon l'une quelconque des revendications précédentes, **caractérisé en ce que** le moyen d'étanchéité (48, 50) est constitué d'un joint à lèvre qui est reçu dans une gorge (52, 54) de l'alésage (14) du maître-cylindre (10).

## Claims

1. "Tandem"-type hydraulic brake master cylinder (10) for a motor vehicle, of the type which comprises a substantially axial body (12) inside a bore (14) of which are slideably mounted, from rear to front, two axial pistons, i.e. a primary piston (16) and a secondary piston (18), which can be actuated by a driver of the vehicle between a rear position of rest and a forward position of applying a braking force, of the type in which each piston (16, 18) is returned elastically toward its rear position of rest against a first rear stop, of the type in which at least one sealing means (48, 50) is interposed between each piston (16, 18) and the bore (14) so as to delimit, within the bore (14), a rear supply chamber (56, 60) supplying hydraulic fluid and a front pressure chamber (58, 62), of the type in which each piston (16, 18) comprises a bore (78, 80) which is open to the front and communicates with the front pressure chamber (58, 62), of the type in which the piston (16, 18) comprises at least one substantially radial valve (82, 84) which opens into its periphery and into its bore (78, 80) and which can move between a flow position, corresponding to the rear position of rest of the piston (16, 18), whereby the valve (82, 84) is arranged rearward of the sealing means (48, 50) and places the rear supply chamber (56, 60) and the front pressure chamber (58, 62) in communication, and an isolation position, corresponding to the forward position of applying the piston (16, 18), whereby the valve (82, 84) is arranged forward of the sealing means (48, 50) and interrupts the communication between the rear supply chamber (56, 60) and the front pressure chamber (58, 62) so as to allow a hydraulic braking pressure to become established in the front pressure chamber (58, 62), and of the type in which the front pressure chamber (58) associated with each piston (16, 18) comprises at least one tubular cylindrical element (90) inside the piston (16, 18), which element extends axially rearward of the sealing means (48, 50) and which is intended, when the piston (16, 18) is advancing, to block off the radial valve (82, 84) so as to obtain a valve closure travel (Cm₂) which is less than the distance separating the valve (82, 84) from the sealing means (48, 50),
**characterized in that** each tubular cylindrical element (90) comprises:
- first detachable means (92) for connection with the bore (14), and
- second detachable means (94) for connection with the associated piston (16),
which are respectively intended to allow each piston (16, 18), while it is advancing, to drive the associated tubular cylindrical element (90) and then, while it is retreating, to take back said element so that it has a minimal axial bulk within the bore (14).

2. Master cylinder (10) according to the preceding claim, **characterized in that** the tubular cylindrical element (90) is, at least in part, arranged radially inside the bore (78) of the piston (16).

3. Master cylinder (10) according to either one of the preceding claims, **characterized in that** the piston (16) is in one piece, **in that** its bore (78) is closed at its rear end by a transverse end wall, and **in that** the radial valve (82) comprises at least one aperture (86) which opens into the periphery and into the bore (78) of the piston (16).

4. Master cylinder (10) according to claims 2 and 3 taken in combination, **characterized in that** the tubular cylindrical element (90) comprises:
- a tubular front section (96) which extends axially forward of the sealing means (48) and which comprises the first detachable means (92) for connection with the bore (14) of the body (12) of the master cylinder (10),
- a tubular rear section (98), the outside diameter of which is the same as the diameter of the bore (78) of the piston (16), which extends axially rearward of the front section (96) of the tubular cylindrical element and the rear end (100) of which is arranged rearward of the sealing means (48) and forward of the aperture (86) in the piston (16) when the piston is in its rear position of rest, and which comprises the second detachable means (94) for connection with the piston (16).

5. Master cylinder (10) according to the preceding claim, **characterized in that** the first detachable means (92) of the tubular cylindrical element (90) for connection with the bore (14) comprise at least two first elastic radial tabs (102) which extend radially at regular intervals from the front section (96) and which are able to be locked into/released from a groove (104) in the bore (14), this groove being arranged forward of the sealing means (48).

6. Master cylinder (10) according to either of claims 4 and 5, **characterized in that** the second detachable means (94) for connection comprise at least two second elastic radial tabs (106) which extend radially outward from the periphery of the rear section (98) of the tubular cylindrical element (90) and which are able to be locked into/released from a groove (107) in the bore (78) of the piston (16).

7. Master cylinder (10) according to the preceding claim, **characterized in that** each second elastic radial tab (106) is arranged perpendicularly at the end of a flexible longitudinal arm (108) housed in a longitudinal slot (110) in the periphery of the rear section (98) of the tubular cylindrical element (90).

8. Master cylinder (10) according to either one of claims 6 and 7, **characterized in that** the second elastic radial tabs (106) are arranged forward of the aperture (86) forming the valve (82) of the piston (16).

9. Master cylinder (10) according to claim 6, **characterized in that** the second elastic radial tabs (106) extend from the end (100) of the rear section (98) of the tubular element (90) and are arranged rearward of the aperture (86) forming the valve (82) of the piston (16).

10. Master cylinder (10) according to any one of claims 6 to 9, **characterized in that** the distance (d₁) separating the first elastic tabs (102) from the second elastic tabs (106) is equal to the distance (d₂) separating the groove (107) in the bore (78) of the primary piston (16) from its front end.

11. Master cylinder (10) according to any one of the preceding claims, **characterized in that** the sealing means (48, 50) consists of a lip seal which is accommodated in a groove (52, 54) in the bore (14) of the master cylinder (10).

## Patentansprüche

1. Hydraulischer "Tandem"-Hauptbremszylinder (10) für ein Kraftfahrzeug, vom Typ, der einen im Wesentlichen axialen Körper (12) mit einer Bohrung (14) aufweist, in der von hinten nach vorne ein axialer Primärkolben (16) und ein axialer Sekundärkolben (18) gleitend angebracht sind, welche von einem Fahrer des Fahrzeugs zwischen einer hinteren Ruhestellung und einer vorderen Stellung zum Aufbringen einer Bremskraft betätigt werden können, vom Typ, bei dem jeder Kolben (16, 18) elastisch gegen einen ersten hinteren Anschlag in seine hintere Ruhestellung zurückgestellt wird, vom Typ, bei dem mindestens ein Dichtmittel (48, 50) zwischen jedem Kolben (16, 18) und der Bohrung (14) angeordnet ist, um in der Bohrung (14) eine hintere Kammer (56, 60) zur Versorgung mit Hydraulikfluid und eine vordere Druckkammer (58, 62) zu begrenzen, vom Typ, bei dem jeder Kolben (16, 18) eine Bohrung (78, 80) aufweist, die nach vorne offen ist und mit der vorderen Druckkammer (58, 62) in Verbindung steht, vom Typ, bei dem der Kolben (16, 18) mindestens ein im Wesentlichen radiales Ventilelement (82, 84) aufweist, das in seinen Umfang und in seine Bohrung (78, 80) mündet und zwischen einer der hinteren Ruhestellung des Kolbens (16, 18) entsprechenden Durchlassstellung, in der das Ventilelement (82, 84) hinter dem Dichtmittel (48, 50) angeordnet ist und die hintere Versorgungskammer (56, 60) mit der vorderen Druckkammer (58, 62) verbindet, und einer der vorderen Beaufschlagungsstellung des Kolbens (16, 18) entsprechenden Sperrstellung beweglich ist, in der das Ventilelement (82, 84) vor dem Dichtmittel (48, 50) angeordnet ist und die Verbindung zwischen der hinteren Versorgungskammer (56, 60) und der vorderen Druckkammer (58, 62) trennt, um den Aufbau eines hydraulischen Bremsdrucks in der vorderen Druckkammer (58, 62) zu ermöglichen, und vom Typ, bei dem die jedem Kolben (16, 18) zugeordnete vordere Druckkammer (58) mindestens ein zylindrisches, röhrenförmiges Element (90) aufweist, das im Kolben (16, 18) angeordnet ist, sich axial hinter dem Dichtmittel (48, 50) erstreckt und bei der Vorwärtsbewegung des Kolbens (16, 18) das radiale Ventilelement (82, 84) schließen soll, um einen Weg (Cm₂) zum Schließen des unteren Ventilelements zu erhalten, der kleiner ist als der Abstand zwischen dem Ventilelement (82, 84) und dem Dichtmittel (48, 50),
**dadurch gekennzeichnet, dass** jedes zylindrische, röhrenförmige Element (90) folgendes aufweist:
- erste abnehmbare Mittel (92) zur Verbindung mit der Bohrung (14) und
- zweite abnehmbare Mittel (94) zur Verbindung mit dem zugeordneten Kolben (16),
die es jeweils ermöglichen sollen, dass jeder Kolben (16, 18) bei seiner Vorwärtsbewegung das zugeordnete zylindrische, röhrenförmige Element (90) mitnimmt und es dann bei seiner Rückwärtsbewegung zurückstellt, damit es in der Bohrung (14) axial ein Minimum an Platz einnimmt.

2. Hauptzylinder (10) nach dem vorhergehenden Anspruch, **dadurch gekennzeichnet, dass** das zylindrische, röhrenförmige Element (90) radial zumindest teilweise in der Bohrung (78) des Kolbens (16) angeordnet ist.

3. Hauptzylinder (10) nach einem der vorhergehenden Ansprüche, **dadurch gekennzeichnet, dass** der Kolben (16) einstückig ausgebildet ist, dass seine Bohrung (78) an ihrem hinteren Ende durch eine quer verlaufende Rückwand verschlossen ist und dass das radiale Ventilelement (82) mindestens eine Durchbohrung (86) aufweist, die in den Umfang und in die Bohrung (78) des Kolbens (16) mündet.

4. Hauptzylinder (10) nach Anspruch 2 in Kombination mit Anspruch 3, **dadurch gekennzeichnet, dass** das zylindrische, röhrenförmige Element (90) folgendes aufweist:
- einen vorderen röhrenförmigen Abschnitt (96), der sich axial vor dem Dichtmittel (48) erstreckt und die ersten abnehmbaren Mittel (92) zur Verbindung mit der Bohrung (14) des Körpers (12) des Hauptzylinders (10) aufweist,
- einen hinteren röhrenförmigen Abschnitt (98), dessen Außendurchmesser dem Durchmesser der Bohrung (78) des Kolbens (16) entspricht, der sich axial hinter dem vorderen Abschnitt (96) des zylindrischen, röhrenförmigen Elements erstreckt, bei dem das hintere Ende (100) hinter dem Dichtmittel (48) und vor der Durchbohrung (86) des Kolbens (16) angeordnet ist, wenn er sich in seiner hinteren Ruhestellung befindet, und der die zweiten abnehmbaren Mittel (94) zur Verbindung mit dem Kolben (16) aufweist.

5. Hauptzylinder (10) nach dem vorhergehenden Anspruch, **dadurch gekennzeichnet, dass** die ersten abnehmbaren Mittel (92) zur Verbindung mit der Bohrung (14) des zylindrischen, röhrenförmigen Elements (90) mindestens zwei erste radiale, elastische Laschen (102) aufweisen, die sich ausgehend von dem vorderen Abschnitt (96) radial in gleichmäßigen Abständen erstrecken und in eine vor dem Dichtmittel (48) angeordnete Nut (104) der Bohrung (14) einrasten und sich aus dieser lösen können.

6. Hauptzylinder (10) nach Anspruch 4 oder 5, **dadurch gekennzeichnet, dass** die zweiten abnehmbaren Verbindungsmittel (94) mindestens zwei zweite radiale, elastische Laschen (106) aufweisen, die sich ausgehend von dem Umfang des hinteren Abschnitts (98) des zylindrischen, röhrenförmigen Elements (90) radial nach außen erstrecken und in eine Nut (107) der Bohrung (78) des Kolbens (16) einrasten und sich aus dieser lösen können.

7. Hauptzylinder (10) nach dem vorhergehenden Anspruch, **dadurch gekennzeichnet, dass** jede von den zweiten radialen, elastischen Laschen (106) senkrecht zum Ende eines flexiblen Längsarms (108) angeordnet ist, der in einer Längsöffnung (110) des Umfangs des hinteren Abschnitts (98) des zylindrischen, röhrenförmigen Elements (90) aufgenommen ist.

8. Hauptzylinder (10) nach Anspruch 6 oder 7, **dadurch gekennzeichnet, dass** die zweiten radialen, elastischen Laschen (106) vor der Bohrung (86) angeordnet sind, die das Ventilelement (82) des Kolbens (16) bildet.

9. Hauptzylinder (10) nach Anspruch 6, **dadurch gekennzeichnet, dass** sich die zweiten radialen, elastischen Laschen (106) ausgehend von dem Ende (100) des hinteren Abschnitts (98) des röhrenförmigen Elements (90) erstrecken und hinter der Bohrung (86) angeordnet sind, die das Ventilelement (82) des Kolbens (16) bildet.

10. Hauptzylinder (10) nach einem der Ansprüche 6 bis 9, **dadurch gekennzeichnet, dass** der Abstand (d₁) zwischen den ersten elastischen Laschen (102) und den zweiten elastischen Laschen (106) dem Abstand (d₂) zwischen der Nut (107) der Bohrung (78) des Primärkolbens (16) und dessen vorderem Ende entspricht.

11. Hauptzylinder (10) nach einem der vorhergehenden Ansprüche, **dadurch gekennzeichnet, dass** das Dichtmittel (48, 50) aus einer Lippendichtung besteht, die in einer Nut (52, 54) der Bohrung (14) des Hauptzylinders (10) aufgenommen ist.
